(19) Europäisches Patentamt / European Patent Office / Office européen des brevets

(11) **EP 3 991 994 B1**

(12) **EUROPEAN PATENT SPECIFICATION**

(45) Date of publication and mention
of the grant of the patent:
**17.04.2024 Bulletin 2024/16**

(21) Application number: **21192518.5**

(22) Date of filing: **23.08.2021**

(51) International Patent Classification (IPC):
*B60C 23/00* $^{(2006.01)}$   *B60C 23/04* $^{(2006.01)}$

(52) Cooperative Patent Classification (CPC):
**B60C 23/0474; B60C 23/001; B60C 23/0477;**
B60C 23/0408; B60C 23/0457

(54) **METHOD OF COMPRESSING DATA**

VERFAHREN ZUR DATENKOMPRIMIERUNG

PROCÉDÉ DE COMPRESSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2020 GB 202017261**

(43) Date of publication of application:
**04.05.2022 Bulletin 2022/18**

(73) Proprietor: **Airbus Operations Limited
Bristol BS34 7PA (GB)**

(72) Inventor: **BILL, Andrew
Bristol, BS34 7PA (GB)**

(74) Representative: **EIP
Fairfax House
15 Fulwood Place
London WC1V 6HU (GB)**

(56) References cited:
DE-A1-102015 115 917    US-A1- 2003 156 022
US-A1- 2016 167 459    US-A1- 2016 311 273
US-A1- 2019 375 254

## Description

Technical Field

The present invention relates to compressing tire monitoring data, such as historical data of tire gas pressure and/or temperature.

Background

Monitoring of tire inflation pressures is an important part of aircraft maintenance. An underinflated tire is more likely to burst during take-off and/or landing and a tire burst can cause significant damage to surrounding aircraft structures. Tire pressure checks are therefore mandated to be carried out at regular intervals for commercial aircraft.

Current methods of tire pressure checking include manual methods (using a pressure gauge to measure each individual tire manually) and automated methods (interrogating pressure sensors attached to each wheel to measure the associated tire pressure). Regardless of whether the pressure check is manual or automated, a decision on tire pressure maintenance is based on readings of all the tires taken in a single measurement session. For example, with manual measurements each tire pressure is measured in sequence and recorded. With automated measurements each tire pressure may be measured substantially simultaneously or may be measured in sequence.

In order to give a reliable result, tire pressure should be measured when the gas in the tire is at ambient temperature. If the tire is above ambient temperature this will increase the measured pressure, so that a tire requiring maintenance may not be correctly identified. If the tire pressure is measured when "hot" or above ambient temperature, the additional gas temperature above ambient will mean that the pressure is higher so that under-inflation is not detected. It can take a long time for the gas in the tire to reach ambient temperature because it is subject to heating from nearby brake system components, such as brake discs, radiating heat while they cool even though the aircraft is standing. Airbus therefore require waiting at least three hours with the aircraft standing before carrying out a tire pressure measurement.

This three-hour requirement can impose significant operational constraints, especially when turnaround is short, so the opportunity to take a tire pressure measurement may be restricted. For example it may only be possible when the aircraft is not in use overnight and has stood for the required amount of time.

Automated pressure sensing devices affixed to an aircraft wheel may include a temperature sensor, but this does not measure the gas temperature directly. The nature of fixation to the wheel means that although pressure is sensed directly, temperature is measured indirectly, by a temperature sensor within the sensing device. The temperature sensor is indirectly coupled to the gas in the tire, it therefore cannot be assumed that the temperature measured is the same as the gas temperature in the tire. Furthermore, the relationship between gas temperature and the temperature sensor is complex, impacted by factors such as time for heat to transfer through the wheel and external heat sources, such as cooling brake discs and current weather conditions.

It would be desirable to improve aircraft tire maintenance. US2016311273 discloses a tire pressure monitor system having a central receiver that determines alerts, rather than individual receivers, so that the tires can be monitored as a system rather than as individual tires. The system is configured to store one or more historical Pressure Value (a "Previous Pressure Value") associated with each tire. Previous Pressure Values are deleted and/or otherwise disregarded after a certain number of subsequent Pressure Values have been obtained.

Summary

According to a first aspect of the present invention, there is provided a computer-implemented method of compressing a data set comprising a plurality of historical tire monitoring measurements spaced by a first time interval. The method comprises: discarding particular ones of the historical tire monitoring measurements which are older than a first threshold age, such that historical tire monitoring measurements which are older than the first threshold age are retained at a second time interval that is longer than the first time interval, wherein the discarding particular ones comprises: either discarding every other measurement, or discarding a predetermined number of consecutive measurements before retaining the next consecutive measurement.

The first time interval may be less than or equal to 10 minutes. The second time interval may be greater than or equal to 20 minutes. The second time interval may be an integer multiple of the first time interval.

The first threshold age may be less than or equal to 24 hours.

The predetermined number of consecutive measurements may be at least one, at least two or at least three.

Optionally, the method further comprises discarding all data which is older than a second threshold age, wherein the second threshold age is greater the first threshold age. The second threshold age may be greater than or equal to the maximum time between tire pressure measurements specified in the Maintenance Planning Documents of the aircraft.

The method may be executed concurrently with the storage of new measurement data received at the first measurement interval. Alternatively, the method may be executed prior to transmission of the data set to another device.

Further disclosed is a computer-implemented method of compressing a data set comprising a plurality of historical tire monitoring measurements each having an associated time and spaced by a first time interval. The method comprises recurrently discarding data which is older than a first threshold time, such that data which is older than the first threshold time is spaced at a second time interval that is longer than the first time interval.

According to a second aspect of the invention, there is provided a processing system configured to execute the method according to the first aspect.

According to a third aspect of the invention, there is provided a tire monitoring device comprising: a pressure sensor configured to take tire gas pressure measurements separated by a first time interval; a storage; and a processing system configured to cause the pressure sensor to take a tire gas pressure measurements separated by a first time interval and store them in the storage. The storage further comprises instructions that, when executed by the processing system, cause the processing system to compress the tire gas pressure measurements stored in the storage using a method according to the first aspect.

According to a fourth aspect of the invention, there is provided a computer-readable medium comprising instructions that, when executed by a processing system, instruct the processing system to perform a method according to the first aspect.

Further features and advantages of the invention will become apparent from the following description of preferred embodiments of the invention, given by way of example only, which is made with reference to the accompanying drawings.

Brief Description of the Drawings

Figure 1 shows a schematic representation of a tire monitoring device.

Figure 2 shows a diagrammatic representation of an aircraft.

Figure 3 is a flow chart of an example method for a tire monitoring device to store a history of temperature and pressure measurements.

Figure 4 shows simulated tire pressure and tire gas temperature data against time during operation of an aircraft.

Figure 5 is a flow chart of an example method for tire maintenance using historical data.

Figure 6 depicts example pressure trend lines against time.

Figure 7 depicts normalized pressure data against time for a first tire monitoring device.

Figure 8 depicts normalized pressure data against time for a first tire monitoring device.

Figure 9 is a flow chart of a method of identifying maintenance information from historical data recorded by a tire monitoring device.

Figure 10 is a plot of an example tire gas temperature against time following a landing event.

Figure 11 is a flow chart of an example method of predicting tire gas temperature using predetermined temperature profiles;

Figure 12 is a flow chart of an example method of selecting a temperature profile;

Figure 13 depicts a plurality of different tire gas temperature profiles.

Figure 14 is a plot of simulated tire gas pressure and temperature over time.

Figure 15 is a plot of the gradient of the data of Figure 14.

Figure 16 is a flow chart of a method of predicting a future temperature using a gradient of historical temperature data.

Figure 17 is a plot of tire gas pressure and temperature against time following an aircraft taxi movement.

Figure 18 is a diagrammatic representation of tire gas pressure measurements where the data has been compressed according to an example.

Figure 19 is a flow chart of an example method of compressing tire measurement data.

Figure 20 shows a schematic representation of a system in which the methods may be implemented.

Detailed Description

It has been found that if a history of tire pressure and temperature measurements is maintained, the historical data can be used to improve the reliability of tire pressure measurement and enable improved tire maintenance.

With the advent of automated, electronic tire monitoring devices which are fixed to an aircraft wheel, measurements of tire pressure can be taken at regular intervals to obtain historical data of pressure without requiring operator input and stored with an associated time of measurement or time stamp. When the tire monitoring device also includes a temperature sensor, temperature data can also be stored along with the pressure data. A history of pressure / temperature pairs with an associated time stamp can therefore be built up over time.

Historical data of tire monitoring measurements can be used for many different purposes covering both short term (the last few hours, such as up to the previous 24 hours or the period since the last landing event) and the long term (the previous months and/or years if sufficient data has been recorded). It can therefore be useful to retain historical measurement data of tire gas pressure and/or other tire parameters that are monitored for long periods of time. This can create large data volumes which require significant storage and greater processing power to analyze. The present invention presents a data compression method for tire monitoring data that retains the ability to analyze data over the short and long term. Before discussing the data compression method, example methods of gathering and analyzing tire monitoring data will be described.

Both pressure and temperature vary dependent on the aircraft's operation including the length of flights, turnaround times, ambient temperature at destinations and weather at destinations. As discussed above, the temperature sensor may not directly measure the gas temperature, so it cannot be assumed that the temperature measured by the temperature sensor is an accurate measurement of the actual gas temperature in the tire. The inventor has recognized that even indirect measurements of temperature can be assumed to be an accurate measurement once both pressure and temperature have stabilized, as will now be explained in more detail.

Stable points of pressure occur when the temperature of the gas in the tire is changing by a relatively small amount, which is often close to the ambient temperature. This means that sources of heat, such as hot brake discs, have cooled and the temperature of the gas is stable. (Over the short term, such as over 10, 20, 30 minutes or similar, changes in measured pressure are most strongly dependent on temperature.) While stable pressure often occurs at a gas temperature close to ambient temperature, this is not necessarily the case; wind chill and heating from direct sun may have an effect on the gas temperature. So, there can still be uncertainty over the actual gas temperature. It has been recognized that if the temperature measured by the temperature sensor is also stable, then that measurement is a more accurate indicator of gas temperature, even for an indirect measurement of temperature. The tire monitoring device containing the temperature sensor is affixed to the same wheel as the tire so will be exposed to generally the same ambient temperature and external heating or cooling effects as the tire. In the same way that the gas in the tire has stabilized in temperature, so has the temperature of the sensing device. Even though the measurement of temperature using a temperature sensor is an indirect measurement, it is a close approximation of gas temperature at these stable points.

Stable points can be identified from a time series of pressure and temperature measurement pairs by determining data in the time series where both pressure and temperature change by a small amount over a predetermined time. For example, a stable point can be identified or determined when pressure and temperature both vary by less than 5%, less than 4%, less than 3%, less than 2% or less than 1% over a time period such as 10 minutes, 20 minutes or 30 minutes. Such points can then be taken as accurate measurements of both pressure and gas temperature in the tire and used in a variety of ways for tire maintenance and/or monitoring. The variation in temperature is preferably measured with temperature expressed in Kelvin, because although the change is relative (and therefore dimensionless), the different zero point on the Celsius and Fahrenheit scales can act to exaggerate sensitivity to changes close to the zero point. In the Celsius scale in particular, the zero point is close to ambient temperatures in some destinations.

In other examples a stable point can be identified from absolute changes. A stable pressure may be one which varies by less than 5 psi, less than 3 psi or less than 1 psi over a time period of 10 minutes, 20 minutes or 30 minutes. A stable temperature may be one which varies by less than 5°C, less than 3°C or less than 1°C over a time period of 10 minutes, 20 minutes or 30 minutes.

In further examples, a stable point may be identified by a substantially similar rate of change in pressure and a substantially similar rate of change in temperature at the start and end of a predetermined period of time. The period of time may be 5 minutes, 10 minutes, 20 minutes or 30 minutes. A substantially similar rate of change in both temperature and pressure suggests that the temperature measurement is accurately tracking the pressure measurement so even though the change in absolute values over the time period may be large, the temperature can nevertheless be taken as an accurate representation of the gas temperature in the tire. More specifically, if the gradient of pressure against time is less than 1%, less than 3% or less than 5% different at the start and end of the predetermined period of time; and if the gradient of temperature against time is less than 1%, less than 3% or less than 5% different at the start and end of the predetermined period of time then that period of time may be identified as containing a stable point.

It is a characteristic of such stable points that the measured quantity is not changing significantly over time, so that a high frequency of measurement is not required; a stable point will be one where the change is small over a matter of minutes. However, there is also a maximum limit for the time interval used to assess stable points. If the gap between measurements is too long, it may be hard to identify stable points due to changes in the ambient temperature or a stable point may be mistakenly identified despite intervening fluctuations in temperature. For example, if the length of time between measurements is 2 hours this may be long enough for changes in ambient temperature during the day to create enough change in temperature that a stable point is not identified. Equally, a time between measurements of 2 hours may be enough that a short haul flight cycle causes the measurements to appear stable when in fact there is significant variation. In both cases a shorter time between measurements, such as every 10 minutes, every 20 minutes or every 30 minutes can enable a stable point to be determined more reliably.

Once a set of stable pressure and temperature points has been identified, pressure trends in the tire can be identified and used to monitor and/or maintain the tire.

The pressure and temperature data can be stored in memory of the individual sensors themselves or elsewhere, for example in a central system within the aircraft itself or remote from the aircraft, such as a cockpit system or at a maintenance facility. While there may be constraints on the amount of memory which can integrated into the sensors themselves, so that it limits the amount of data that can be retained, transferring the data and storing it elsewhere may enable long histories of measurement data to be stored. For example, a central system may have effectively unlimited data storage for pressure and temperature pairs so that measurement data may be maintained for the entire tire service life. Such a system can also maintain data that persists across physical changes to the tire, such as retreading (also referred to as remolding).

As a further benefit, through the use of an automated sensor to take the measurements, data can be obtained automatically, without additional labor required from maintenance staff.

Measurement data may initially be stored in the tire monitoring device itself, in a central system which is part of aircraft, or both. This measurement data may be transferred to another device or system at times when a tire pressure measurement takes place, for example when a mandated tire pressure check takes place.

Once determined, the stable pressure measurements may be converted or normalized to a pressure at a same predetermined temperature so that they can be directly compared. For example, the pressure may be converted to a normalized pressure at 15°C. This can be done in several ways. One way is to use a known relation of how much pressure changes following a change in temperature, such as a 10°C change in temperature changes pressure by 3.7%. Another way is to apply the Ideal Gas Law. Using a known relation may be computationally simpler, while applying the Ideal Gas Law may be more accurate. In both cases, some assumptions about the behavior of the tire and gas inside it are made. These may include that the gas is an ideal gas and that the volume of the tire does not change. Aircraft tires are filled with Nitrogen, which can be considered to behave as an ideal gas over the operating pressure and temperature ranges experienced by aircraft tires. An aircraft tire is inflated to relatively high pressure, typically 200 psi (1379 kPa / 13.79 Bar) and the construction of tire means that volume change is minimal over the tire's operating pressure range.

Further assumptions or variables may also be considered, such as whether the tire is loaded or unloaded (measurement during flight will be unloaded, for example). This may dependent on the specific aircraft and tire configuration. For example, it has been suggested that the difference in measured pressure between an unloaded tire and loaded tire is 4%, while other tests carried out on an Airbus A380 suggested that there is little measurable change in tire pressure between loaded and unloaded states. The impact of tire loading on pressure may therefore depend on particular aircraft model or particular combinations, such as of two or more of aircraft model, wheel configuration and tire model. If tire loading is considered to adjust the pressure measurements, then those periods where a tire is unloaded can be identified from trends in the historical data and the measurements adjusted depending on the loading state of the tire. For example, the historical data may be examined for a relatively steep upward gradient in the pressure or temperature measurement followed by cooling. Such steep upward gradients generally correspond to a landing events so the loading state can be changed to loaded. Similarly, the low temperature when flying at cruising altitudes can allow flight periods to be identified, through absolute temperature or by a relatively steep downward gradient in the temperature or pressure measurements. Take off events may be identified by a relatively small absolute increase in pressure or temperature, or a relatively shallow upward gradient in pressure and temperature, followed by cooling.

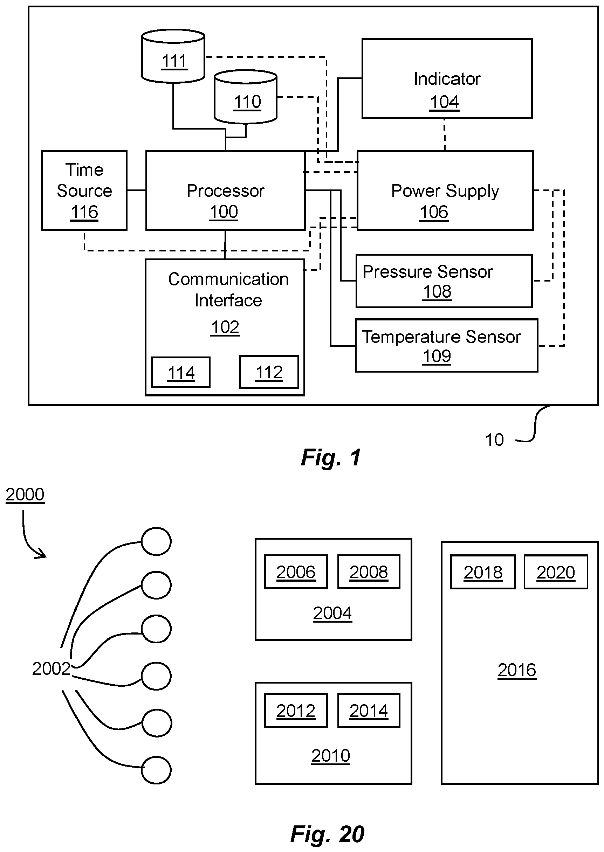

The methods and applications discussed herein can be applied to any aircraft using tire monitoring devices that can be instructed to measure pressure and temperature at regular intervals and cause those measurements to be stored with an associated timestamp. An example tire monitoring device is shown in schematic format in Figure 1.

Figure 1 shows a schematic representation of a tire sensing device or tire monitoring device 10 for use with the methods and applications described herein. The tire monitoring device 10 is configured for mounting on a wheel, for example by a mechanical connection to an opening on the wheel providing access to the tire. The tire monitoring device 10 includes a processor 100, a communication interface 102, an indicator 104, a power supply 106, a pressure sensor 108, a temperature sensor 109, a first storage 110, a second storage 111 and a time source.

Processor 100 may be any suitable processing device including a microprocessor with one or more processing cores. In use, processor 100 coordinates and controls the other components and may be operative to read and/or write computer program instructions and data from/to the storage 110, 111.

Communication interface 102 is connected to the processor 100 and is used to both transmit and receive data from the other devices within a tire pressure sensor system. In this example, the communication interface is a wireless communication interface including two transceivers, 112, 114 which both use different wireless technology. A first transceiver 112 is provided for relatively long-range communication, up to about 50m or about 100m. For example, the first transceiver may use a communication standard suitable for mobile devices, such as IEEE 802.15.1, IEEE 802.15.4, IEEE 802.11 (Wi-Fi) on either the 2.4 GHz or 5 GHz Industrial Scientific and Medical (ISM) bands or a Wireless Avionics Intra-Communications (WAIC) standard. The first transceiver also includes an encryption module for encrypting sent data and decrypting received data, for example according to the Advanced Encryption Standard (AES) utilizing pre-shared keys. A second transceiver 114 is provided for relatively short-range communications. For example, the second transceiver 114 may use a standard according to IEEE 802.15, such as IEEE 802.15.4, RFID or Near Field Communication (NFC). The second transceiver may operate over a range of less than 5m, less than 3m, less than 1m, less than 50 cm, less than 25 cm, less than 10 cm, less than 5cm, less than 1cm or requiring contact between devices. Like the first transceiver 112, the second transceiver 114 also includes an encryption module for encrypting sent data and decrypting received data.

In some examples, a single wireless transceiver may be provided in the wireless communication interface. In that case the single transceiver may use relatively short range or relatively long range communication, or adjust the range (such as by controlling transmit power) as required.

Indicator 104 is connected to the processor 100 and controlled by the processor 100 to provide indications to a user of the tire pressure sensor system. In this example the indicator is an LED, but in other examples the indicator is another form of light, a display, such as an LCD or e-ink display, or any other form of visual indication. In other examples, the indicator is an audible indicator, such as a buzzer, beeper, speaker or any other sound generating component. In further examples, the indicator can comprise both audible and visual indication components. The indicator provides at least first and second indications, for example a first color and a second color of emitted light. Further indications can also be provided, such as solid or flashing light. The tire monitoring device has a housing (not shown) and the indicator 104 can provide an indication outside the housing, for example the LED may be mounted external to the housing or visible through the housing, or sound may be able to be emitted from within the housing.

The power supply 106 provides power to the elements of the sensing device. It may be a battery, such as Lithium battery. In this example, the power supply is a Lithium battery with power sufficient to run the sensor in normal operation for several years, such as 2 to 3 years. In other examples the power supply may comprise a power harvesting system, for example harvesting vibration and/or electromagnetic radiation to charge a capacitor or battery which is then used to power the device.

In use, the tire monitoring device may spend much of its operational life in "sleep" or low power mode, with most of the components other than the processor and wireless communication interface powered off. This can conserve battery life. For example, the tire monitoring device may be by default in a low power mode, listening for a command to measure or report tire pressure. While in this low power mode the tire monitoring device can be scheduled or otherwise caused to wake up at predetermined intervals or times, sense pressure and temperature and store the results. For example, pressure and temperature may be sensed every minute, every 5 minutes, every 10 minutes, every 15 minutes, every 20 minutes, every 30 minutes, every hour or every 2 hours and stored for use in trend monitoring. It has been found that a measurement every 10 minutes provides a good balance between conserving power and providing useful data for historical trend monitoring.

The pressure sensor 108 is connected to processor 100 and may be any suitable sensor for measuring pressure, for example a capacitive sensor. Similarly, the temperature sensor 109 is connected to processor 100 and may be any suitable sensor for measuring temperature, such as thermocouple. The temperature sensor 109 is arranged to measure the temperature of the gas inside the tire indirectly, by measuring a temperature associated with part of the sensing device which is thermally coupled with the gas through the connection to the wheel.

The connection of the pressure sensor 108 and temperature sensor 109 to the processor 100 may be digital, providing a digital representation of the measured pressure and/or temperature from an Analogue to Digital Convertor (ADC) in the sensor itself, or analogue, in which case the processor may include an ADC to sample the received signal. Including both a pressure sensor and a temperature may be useful to determine a temperature compensated pressure value.

This example includes two storage elements 110 and 111. Storage 110 is non-volatile rewritable storage in this example, such as flash memory which can retain data without requiring applied power. Other examples may include volatile storage, which is kept powered by the power supply, or combinations of read-only and rewritable storage. Storage 110 is connected to the processor 100 and used to store both computer program instructions for execution by the processor and data, such as data from the pressure sensor 108 or data received over the wireless communication interface 102. Storage 110 is therefore configured to store a history of pressure and/or temperature readings sensed by the pressure sensor 108 and the temperature sensor 109. The history may be stored for at least the maximum time between a pressure measurement for tire maintenance, such as for at least three days. This can ensure that enough history is held to provide details since the last maintenance tire pressure reading, so that the history can be transferred for use in trend analysis, along with the current pressure measurement data. In other examples, longer periods of history may also be kept. For example, the previous ten days readings may be stored, with the newest data replacing the oldest once the storage is full, such as using a FIFO structure or similar.

Storage 111 is secure storage to which write and/or read access is restricted, for example only accessible to certain processes running on processor 100. Configuration data, such as wireless encryption keys can be stored in storage 111. In other examples, a single storage may be provided, or storage 110 and 111 may be provided in a single physical device with a logical partitioning between storage 110 and storage 111.

The tire monitoring device 10 also comprises a time source 116, such as a counter or a real time clock. The time source provides a value indicative of current time for indicating the time at which a measurement was taken, for example the processor 100 may cause a current value of the time source to be associated with each pressure and temperature measurement when it is stored in the storage for use as a timestamp.

A timestamp may be an indication of real time (such as Coordinated Universal Time, UTC). A timestamp may also be a relative measurement, such as a counter value where the counter is initialized at a point in the use of the tire monitoring device, such as when the tire monitoring device is first put into service. Where relative timestamps are used, they may be converted to a real time by noting the value of the timestamp for a known time and considering the interval at which the counter is incremented.

It is not required for the time source 116 to be synchronized with other tire monitoring devices on the same aircraft because the methods using historical data described herein can be applied to the data of each monitoring device independently. When data of more than one tire monitoring device is required to be viewed on a common timeline timestamps can be converted to a common reference timeline. For example the current time when a mandated tire pressure measurement takes place may be recorded along with a corresponding value of the timestamp and used to convert.

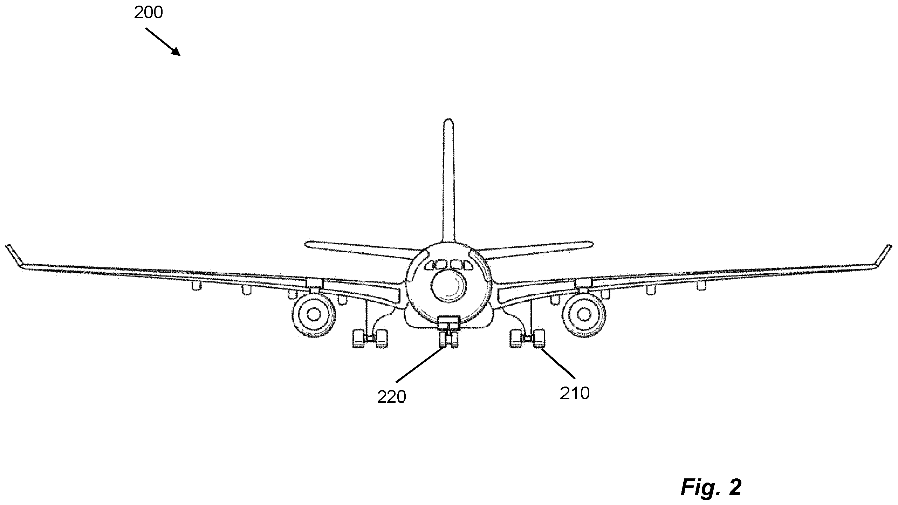

A tire monitoring device 10 is provided on each wheel of an aircraft. An example aircraft 200 is depicted in Figure 2, which is a diagrammatic representation of a front view of an Airbus A320 aircraft. The aircraft has six wheels in total; four wheels as part of the main landing gear 210 and two wheels as part of the nose landing gear 220. The aircraft 200 therefore has six tire monitoring devices. Other models of aircraft may have different numbers of wheels and hence different numbers of tire monitoring devices. An Airbus A380 has twenty-two wheels and so will have twenty-two tire monitoring devices, for example.

In one example, the aircraft may include a tire monitoring system which is integrated with a central system of the aircraft, so that the tire monitoring devices themselves are in communication with the central system. For example, the aircraft may be provided with a monitoring system which is accessible through an interface in the cockpit of the aircraft and/or through a separate maintenance system when on the ground. An example of an aircraft with a central system for tire monitoring is the Airbus A380.

In another example, the tire monitoring system may be a standalone system of tire monitoring devices which operate independently from other aircraft systems. Such a system may be provided on an aircraft from new or retrofitted to add functionality to an existing aircraft. An example of such a system is described in EP-3 498 501A1, incorporated herein by reference for all purposes.

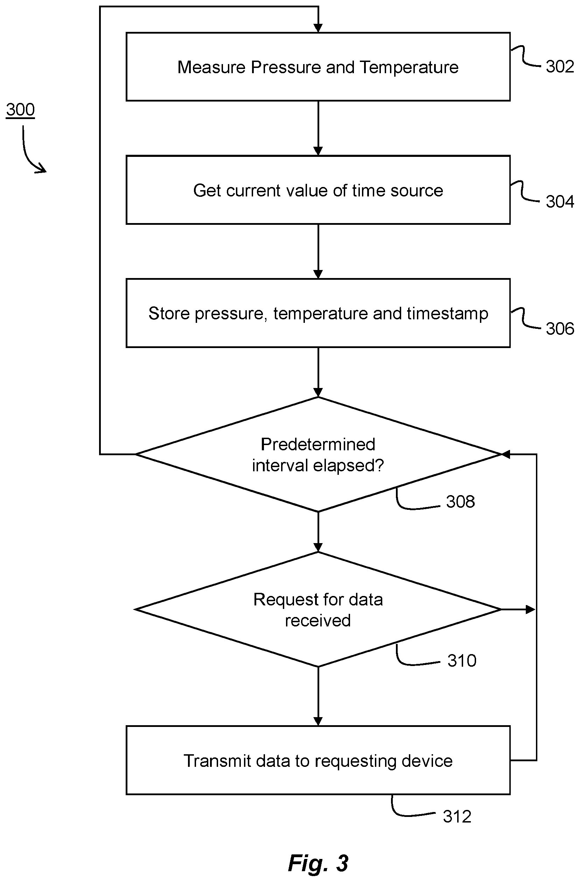

Figure 3 depicts a method 300 which can be implemented by a tire monitoring device 10 in order to store a history of temperature and pressure measurements. First, at block 302, the device 10 measures both the pressure and temperature using the pressure sensor and the temperature sensor. The current time is read from the time source at block 304. Next, at block 306, the pressure and temperature measurements are stored in the storage along with an associated timestamp based on the time read from the time source. A single data structure may be used to hold the pressure, temperature and timestamp; the pressure and timestamp may be stored in a separate data structure from the temperature and timestamp; or the pressure, temperature and timestamp may be all be stored separately and associated by common key such as an index number. A single data structure may reduce storage requirements, but separate data structures may allow more flexibility.

Pressure can be stored in any suitable unit, such as psi, atm, or kPa. Likewise, temperature can be stored in any suitable unit, such as °C or K. The timestamp can be a value of the time source or expressed relative to a real time base, such as UTC.

The blocks 302, 304 and 306 are repeated at predetermined intervals. The predetermined interval may be governed by a querying a timer, scheduling at an interrupt at an appropriate time interval and any other suitable method. The predetermined interval can be regular, for example taking a measurement once every 1, 5, 10, 15, 20 or 30 minutes. A measurement every 10 minutes has been found to present a good balance between power saving and gathering enough historical data to allow useful analysis. As depicted in Figure 3, at block 308 it is determined whether a predetermined time interval has elapsed. If it has the method proceeds to block 302 to take another measurement, if it has not the method proceeds to block 310.

The tire monitoring device can provide a plurality of the stored data to a requesting device in response to a request from another device, such as a maintenance device or a central maintenance system. In the method of Figure 3, at block 310, while waiting for the next measurement task, the tire monitoring device can monitor for a received request over the communication interface and provide a response, such as by determining if a request for historical data has been received at block 310. If a request has been received, execution proceeds to block 312, otherwise execution returns to block 308.

At block 312, at least a portion of the stored data is provided to the requesting device using the communication interface. For example, the request may specify a required time period for the data or the device may transmit the most recent data for a predetermined period, such as for the last day, the last 3 days or the last 10 days. In other examples all the data in the storage is provided to the requesting device.

According to the method of Figure 3, tire monitoring devices can measure and store data on pressure and temperature over time and provide it to a requesting device. While Figure 3 has described the use of logical tests at blocks 308 and 310, other examples may use an event-driven structure.

In examples where the tire monitoring device is in communication with a central system of the aircraft, each measurement may be transmitted to the central for storage as they are taken, alternatively or additionally to sending data in response to a request in blocks 310 and 312.

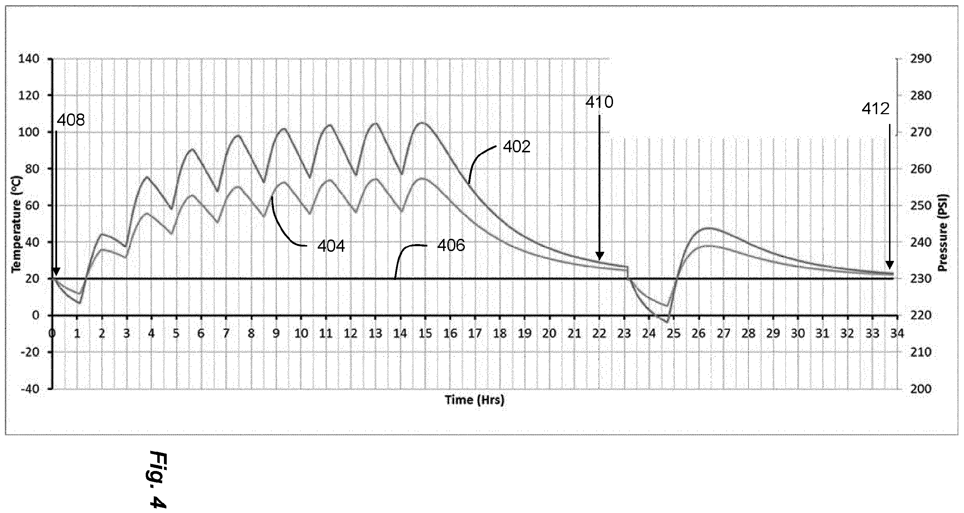

Example data that may be collected by a tire monitoring device as discussed above with reference to Figure 1 is depicted in the graph of Figure 4. Figure 4 depicts simulated pressure and temperature data for an aircraft which carries out eight 1-hour flights on a first day followed by a single 90-minute flight the next day. Figure 4 depicts the variation in Tire gas pressure 402 (the right-hand axis), Tire gas temperature 404 (left-hand axis) and ambient temperature at ground level 406 (left-hand axis) against time. The simulated data is from a 2-Dimensional Computational Fluid Dynamics (CFD) model of the Wheel, Tire and Brake (WTB). The model is an axisymmetric conjugate heat transfer model which calculates the temperature of all solid and fluid components.

Referring to Figure 4, the aircraft begins at time = 0 hours with pressure and temperature both equal to ambient (20°C / 293 K). During the first flight cycle, the low temperature at altitude causes pressure and temperature to drop until the aircraft lands. Landing introduces heat to the tires from several sources, including from the increased temperature at ground level, flexure of the tire on landing and heat radiated from components of the brake system, such as brake discs. The tires continue to heat while the aircraft is standing, for example the brakes radiate heat, warming the gas in the tire, and continue to increase the heat of the gas in the tire for the relatively short time - 1 hour - that the aircraft is standing. After take-off the lower temperature at altitude causes cooling, as can be seen for the period from 2 to 3 hours. Landing again causes a heat input and a heating period occurs from time 3 to 4 hours until the aircraft takes off again. The cycle continues until the aircraft ceases operations and stands overnight, from time = 14 hours to time = 23 hours. During this standing period the pressure and temperature rise to a peak at time 15 hours and then slowly reduce towards ambient. The 90 minute flight between time = 23 hours and time = 25 hours further cools the tire before temperature rises on landing. Finally, the temperature and pressure again rise to a peak and the reduce towards ambient as the aircraft stands.

The graphs in Figure 4 show how difficult it is to measure tire pressures reliably for a commercial aircraft because they are constantly changing. In order to ensure that the gas temperature in the tire is close to ambient for an accurate pressure reading, at least a three-hour standing time before taking a pressure measurement is currently mandated, but such a period is not available for much of the day. Even after a three hour standing period, such as can be seen in Figure 4 from time = 14 to 17 hours, tire gas temperature is still around 30 °C above ambient even after three hours standing.

Furthermore, Figure 4 depicts the actual simulated gas temperature, this is not necessarily the temperature that is measured when the temperature is sensed indirectly as is the case for automated tire monitoring devices. The indirect measurement means that accurate measurement of gas temperature can only be obtained at certain times because the indirect temperature measurement can lead or lag that of the gas in the tire.

It has been found that despite the significant variations during an aircraft operating cycle, historical data of pressure and temperature measurements can be used to improve tire maintenance. By determining stable points in the data, at those stable points the measured temperature is a good representation of the gas temperature, despite the indirect measurement. For example, a stable point may be where the pressure and temperature, in K, both change by less than 2% over a 10 or 20 minute period. This is because the stable nature of the point means that the system is tending towards an equilibrium state where the temperature of all the components of the wheel system is generally the same, so that the indirect measurement is close to the actual gas temperature. Stable points exist in Figure 4 at the times 0 hours (indicated by arrow 408), 23 hours (indicated by arrow 410) and 34 hours (indicated by arrow 412) for example. These can then be used to determine pressure trends without the influence of the aircraft operating cycle, as will now be described.

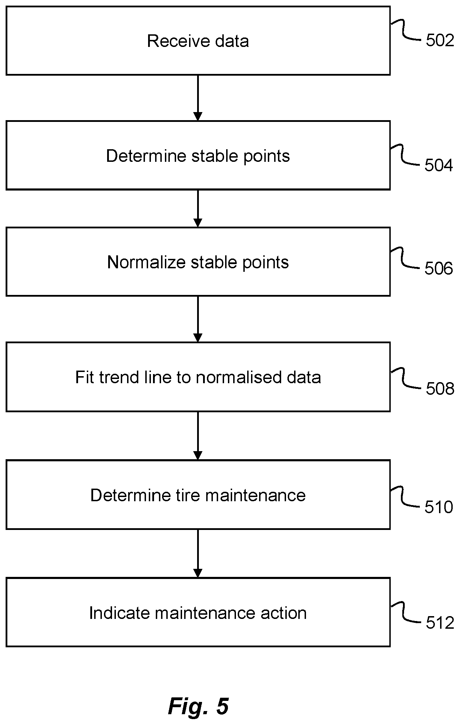

An example computer-implemented method for tire maintenance using historical data that can be executed by a processing system is depicted in Figure 5. First, at block 502, the data of pressure and temperature measurements and an associated timestamp is received. The data may be retrieved from a storage device or requested from a tire monitoring device, for example.

Next, at block 504, stable points are determined. In this example, the stable points are determined by stepping through the dataset and considering each pair of consecutive data to establish the relative change in both pressure (expressed in psi, kPa or Bar) and temperature (expressed in K). If the change in both is less than 2% then the pair of points are recorded as a stable point. Stable points may be saved in a separate dataset or otherwise marked as stable, for example by setting a flag associated with those data points in the data set. In other examples stable points may be identified by looking for a constant rate of change, such as by determining that the gradient of both pressure and temperature is within 2% for a consecutive pair of data points.

Once the stable points have been identified, the data is normalized at block 506 to express the pressure measurement at a predetermined reference temperature so that the pressure data is directly comparable. For example, a reference temperature of 15°C (288 K) may be used. This normalization can use any suitable technique. For an aircraft tire, which is filled with nitrogen to pressures around 200 psi (1,380 kPa / 1.38 Bar), it can be assumed that the gas in the tire behaves as an ideal gas, and that the tire volume is constant. With these assumptions a relation can be used to normalize the pressures, for example that a change of 10 K in temperature corresponds to a 3.7% change in the pressure. Alternatively, with the assumption of an ideal gas and constant volume, the pressure may be converted using the Ideal Gas law as follows:

$$ P_{end} = \frac{P_{start} T_{end}}{T_{start}} $$

Where $P_{end}$ is the pressure expressed at the desired temperature, such as a reference temperature, $P_{start}$ is the measured pressure, $T_{end}$ is the desired end temperature in K and $T_{start}$ is the measured temperature in K.

This normalized data can then be used to fit a trend line to the pressure over time at block 508, for example using linear regression with least squares. The least squares method is computationally simple and works well in this application because pressure loss from a tire can be assumed to be a straight line between reinflation events. (A straight line approximation is reasonable because the overall pressure change is small; a tire will be re-inflated when it is at lower than 100% of its normal operating pressure). Other examples may use other methods to determine the trend line, including fitting a curve or polynomial rather than a straight line.

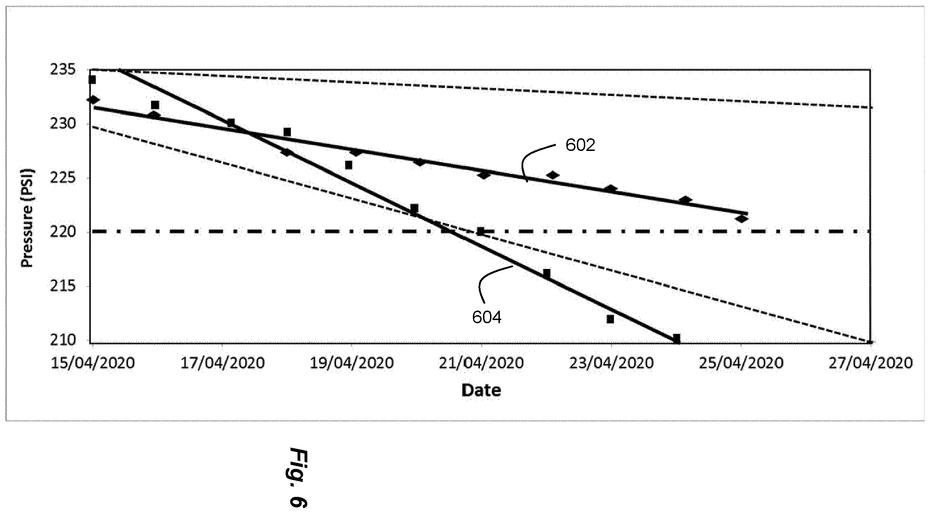

Figure 6 shows some example trend lines that might result once the stable points have been identified, normalized and a trend line fitted to them (the data here is illustrative and not based on test results). A first trend line 602 is the trend for a tire on a first wheel and a second trend line 604 is the trend for a tire on a second wheel. It can be seen clearly that the deflation rate for the second wheel is faster than that of the first wheel.

Returning to Figure 5, at block 510, any tire maintenance requirements are determined. This determination may use the stable data itself, for example making a tire maintenance determination based on the absolute or normalized values. The determination may also use the trend line, which can be indicative of tire health and whether maintenance is required

In one example, if the deflation rate indicated by the trend line is greater than a predetermined threshold, such as 5% a day, a maintenance action can be indicated. A deflation rate exceeding a threshold is indicative of a tire fault, but might not be identified from the existing single measurements - the pressure itself may be acceptable but the historical trend shows that deflation is high and the tire and/or wheel should be replaced.

In another example, if the trend line indicates inflation over time, without a corresponding inflation event, a maintenance action can be indicated. Inflation over time cannot occur without an inflation event so this indicates a fault in the tire monitoring device, which should be replaced.

In other examples, the trend line can be used to predict a pressure of the tire at a point in the future and potentially indicate a maintenance action. While the current pressure may be within acceptable limits, so that no action is required at the current time, the trend line can be used to predict the pressure at a future time, such as the time of the next tire pressure check. The next tire pressure check can be determined based on the mandated maximum time between tire pressure checks. An example of a mandated maximum time between tire pressure checks is the interval defined in the Maintenance Planning Documents (MPD) for the aircraft, such as 3 days for a single aisle aircraft such as the Airbus A318, A319, A320, A321 and 48 hours for other aircraft, such as the A380 and A350. Some operators may choose to adopt a shorter time between tire pressure checks than that defined in the MPD, so alternative time periods may be used instead in some examples. In other examples a specific time period to look ahead, or a specific date and time in the future may be received as an input to predict the pressure.

If the predicted pressure at the time in the future, for example the time of the next tire pressure check as required in the MPD, is below acceptable limits a maintenance action can be indicated at the current time, rather than waiting for the next measurement. In this way tires can be maintained more proactively and wear due to underinflation minimized, potentially improving safety and/or tire lifetimes.

Regardless of what maintenance action is indicated, the maintenance action can be indicated at block 512 in any suitable way. For example, a user interface may indicate a need to take a maintenance action. The user interface could be provided as part of a cockpit information system or a separate maintenance device. Providing the indication on a separate maintenance device is useful when the maintainer is carrying out a tire pressure check, for example. Providing the indication on a cockpit system is useful as part of pre-flight checks, for example (as the system uses historical data, analyzing the historical data could form part of a pre-flight check to enhance safety, for example).

In some examples, additionally or alternatively to indicating a maintenance action, a maintenance action may be caused based on the trend line. For example, a nitrogen cart may be dispatched to the aircraft to be used for reinflation, or a tire replacement scheduled.

The method of Figure 5 could be carried out by any suitable processing system, including the tire monitoring devices themselves. In some examples, the method of Figure 5 is carried out a central maintenance facility, such as one maintained by an aircraft manufacturer or airline operator or a specialist service contractor. The central system may be sent the data via a computer network responsive to a tire pressure measurement check taking place. This may be beneficial to allow a wider view of tire performance across a fleet to be analyzed. Scheduling maintenance in response to the historical data is also improved when carried out by a central maintenance system because it can take expected destinations into account. If reinflation in the future is predicted, a central maintenance facility could schedule the reinflation for when the aircraft is next at a destination with suitable facilities but still before the pressure is predicted to fall too low, improving maintenance.

Historical data can provide insight into the operation and maintenance of a particular tire or aircraft. Historical tire gas pressure and temperature data can be analyzed for maintenance information, such as identifying a tire with poor inflation performance or shorter life compared to other tires; identifying when a tire is inflated over its lifetime and so on. The data can be used a check, to confirm that tires are being maintained according to the required standards, and may also function as an indicator of another maintenance issue, such as a poorly set up wheel assembly resulting in faster tire wear than normal. By automating the collection of data, a large set of reliable data can be gathered with a much higher measurement frequency than existing checks, which may only occur once every 3 days.

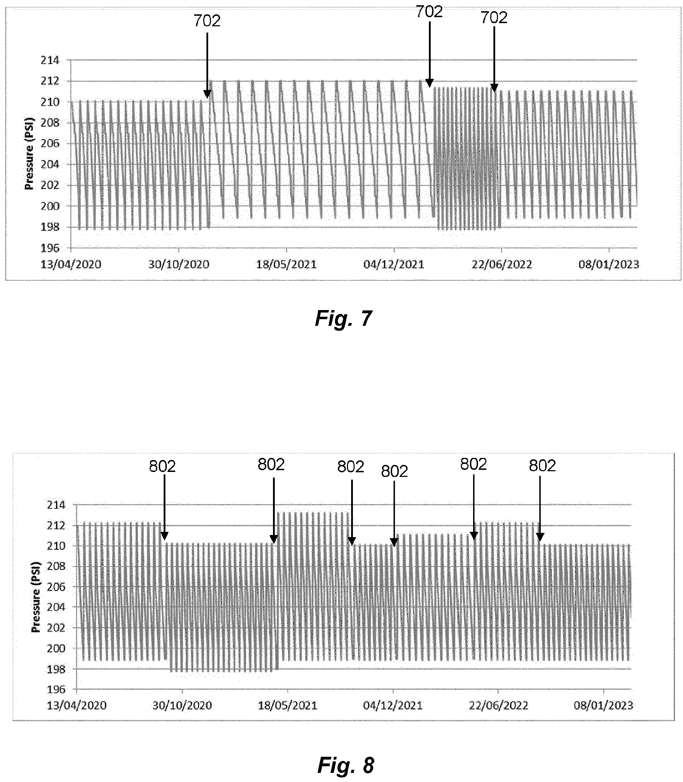

Figure 7 depicts example normalized pressure data from a first tire monitoring device over a period of three years. Figure 8 depicts example normalized pressure data from a second tire monitoring device over the same period of three years. The data depicted in Figures 7 and 8 is representative and is not real data, but has been prepared to demonstrate the trends and features that can be identified from real data. Normalized data, such as depicted in Figures 7 and 8 can be determined from stable points identified in the historical data which are then converted to be expressed at a common temperature as discussed above. The normalized data then reveals the underlying inflation and deflation trends when viewed over periods of months or years, such as at least three months, at least six months, at least one year or at least two years. Once the data is normalized, an increase in pressure is due to inflation of the tire because, with assumption of an ideal gas and constant volume, the normalizing means that the pressure increase cannot be down to temperature - the only remaining variable that could result in a pressure change. After an inflation event, the pressure then gradually decreases over time due to leakage until the next inflation event. Although normalized data is depicted in Figures 7 and 8 and referred to below, directly measured data (not adjusted or normalized) is also useful alternatively or in addition to the normalized data. For example, directly measured data can give useful information on the absolute effects of temperature and the operating environment, which can be useful to determine impact on inflation and deflation trends.

The depiction of the normalized data allows the inflation-deflation cycles in Figures 7 and 8 to be easily seem from the visible pattern. Inflation may also be determined by analyzing the data numerically, for example an inflation event may be determined by determining a time where pressure increased with a gradient of greater than 0.25 psi (1.7 kPa/ 0.017 Bar), 0.5 psi (3.4 kPa / 0.034 Bar) or 1 psi (6.9 kPa / 0.069 Bar) per minute. This can filter any effects due to imperfect normalization rather than simply looking for any increase in pressure. (The stable points are a good indicator of gas temperature, but the temperature sensor is still indirectly coupled which can introduce a small error.)

A similar gradient analysis can also be used to identify inflation events when the pressure is not normalized, with a suitable threshold. Although temperature also causes changes in pressure, heating of the gas in service does not increase the pressure as quickly as this, so gradient analysis of pressure data can be a reliable way to determine an inflation event.

An inflation event can also be identified by looking for a step change in the normalized pressure, from less than 100% to greater 105% the reference pressure for the tire without a corresponding change in temperature

Another way that an inflation event could be recognized is to compare the pressure and temperature gradients, if the temperature gradient indicates that temperature is substantially constant but pressure is increasing then this is also indicative of an inflation event; without a temperature rise or volume change the only way pressure can increase is by inflation.

In addition to this cycle of inflation and deflation, the timescale of the graphs in Figures 7 and 8 also allows tire changes to be determined. On Figure 7, a tire change is indicated by arrow 702, on Figure 8 a tire change is indicated by arrow 802. A tire change can be determined from the data by a change in deflation rate between inflation events and/or a change in maximum or minimum pressure. A change in the deflation rate can be due to changes in the interface between the wheel and the tire when the tire is replaced, or down to changes in the construction of the tire. A change in pressure can be because the entire wheel is usually changed when a tire replacement is required. As well as determining a tire change from the historical data itself, data of a tire change can be provided separately, for example by consulting maintenance records stored in a database recording that a tire change has taken place. Tire changes may also be recorded by the tire monitoring device, which may sense the drop in pressure during the tire change process and record a tire change event at that time.

Figures 7 and 8 show how historical data can be useful to determine maintenance information both in isolation (i.e. considering a single wheel) and in combination (i.e. comparing data of at least two different wheels). Each of Figure 7 and 8 enables individual tire service life to be determined, and perhaps the performance of different models or brands of tires to be compared. When the tire lifetimes in Figure 7 are compared to Figure 8, further maintenance information and trends can be determined. The data shows that the wheel of Figure 7 required only three tire changes compared to six for the wheel of Figure 8 over the same time period. By analyzing the data and determining a tire replacement frequency, or a time interval between tire replacements, discrepancies for a particular wheel may be identified. For example, the wheel of Figure 8 may be identified for maintenance because the increased replacement frequency suggests that the wheel is set up in way that increases tire wear. Such wheel maintenance may be indicated or scheduled when the tire replacement frequency exceeds a predetermined threshold, when the tire replacement interval is shorter than a predetermined threshold, or when either or both of these characteristics differs by at least 20%, 30%, 40% or 50% from another wheel on the same aircraft.

The historical data can also be used to identify poor maintenance practices or to confirm that adequate maintenance has taken place. For example, the data can reveal the minimum pressure of a tire in service between two consecutive inflations of the tire. If the minimum pressure is below a predetermined threshold it can indicate poor maintenance: a tire is not being inflated when it should be. Furthermore, by determining a time for which pressure remains below the threshold, the severity of the under-inflation can be determined. If the under threshold pressure condition lasts less than the time mandated between pressure checks, such as 3 days, then it may be less serious because it can be assumed that inflation was carried out as soon as the under threshold pressure condition was noticed. However, an under threshold pressure condition lasting more than the mandated time between pressure checks is more serious, because the longer interval suggests that either inflation checks are not being carried out as required or that an inflation check has been carried out but some reason the under-inflation condition was not identified. In other examples, timings other than the mandated time between pressure checks may be used, such as the interval specified by a particular operator. This can be useful for ensuring the maintenance is carried to the required standards, such as when an aircraft is operating away from its home maintenance base or when maintenance has been subcontracted to a third party

Similarly, the historical data can be used to identify the maximum pressure of a tire in service, for example between two consecutive inflations of the tire. This can also indicate poor maintenance; tires may be over-inflated to allow longer between inflation events, but an over inflated tire may wear more quickly. Over-inflation may be identified by comparing the maximum pressure to a threshold and providing a maintenance indication to take action if the pressure is exceeded, such as to reduce the tire pressure.

If additional data is available about the tires fitted to the wheel, for example recorded in a maintenance database, then further insight can be gained from the historical data. Tire brands and/or models can be compared to identify those which perform the best using in-service data, without requiring expensive laboratory testing. Retreading or remolding an aircraft tire is also common. The additional data relating to the tire may comprise a retread count, indicating how many times it has been retreaded. In-service performance, such as deflation rate and time before replacement, can then be compared to determine whether there is a correlation with retreading and the number of times a tire has been retreaded.

If the tire monitoring device has access to GPS data, a GPS location may be associated with the historical tire gas pressure and temperature, indicating location at the time of the measurement. When location data is available it can be combined with other maintenance data to identify any maintenance locations that are underperforming, such as consistently over-inflating tires. The GPS data may come from a GPS unit which is built into the tire monitoring device or from an external source, such from another system on the aircraft which is queried by the tire monitoring device.

While using normalized data for this historical trend analysis has been assumed above, absolute measured values can also be used. This can be most beneficial for determining times when the pressure exceeded a predetermined maximum measured pressure threshold, or was under a predetermined minimum pressure threshold as the actual pressure may vary significantly from the normalized pressure (compare the variation in Figure 4, where the data is not normalized, with Figure 7, for example).

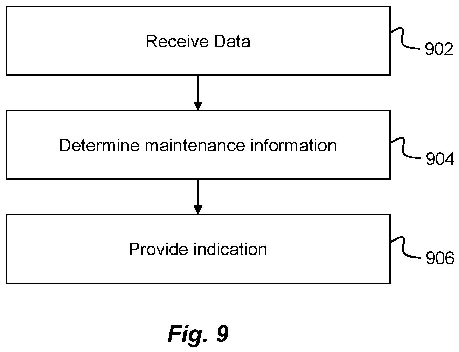

Figure 9 depicts a method by which analysis of historical data to identify maintenance information or maintenance trends can be carried out. The method is implemented by a processing system, for example a processing system forming part of a central maintenance system or a standalone maintenance device.

At block 902, data is received of a plurality of tire gas pressure measurements each measurement having an associated time. This data may span a predetermined period, such as the past six months, past year, past 2 years, past 3 years or longer. Alternatively, all the data available for a tire may be received. The data may be received over a communication interface or received from storage of the device carrying out the method. The pressure data can have been normalized to a reference temperature, for example by determining stable points as discussed above, or can be the actual measured pressure. Temperature data can also be included, which is particularly useful when the data is actual measured pressure rather than normalized pressure.

Next, at block 904, the received data is analyzed to determine maintenance information, wherein the maintenance information comprises at least one of: an inflation event, a maximum pressure, a minimum pressure and a tire replacement event. Any of the examples discussed above can be used to determine these events.

At block 906, an indication based the determined maintenance information is provided. The indication may be visual or audible. For example, if the historical data suggests no problems, the indication may simply be a "OK" or a green light. If there are points to address, such as high replacement frequency on a particular wheel, then an appropriate indication can be provided such as "service wheel 4". Where the method runs on a central maintenance system, the indication can relate to performance of particular service locations or service facilities, such as "service location 1 is consistently over inflating tires".

In some examples, the method may further include scheduling maintenance in addition to providing the notification, for example scheduling a wheel check next time the aircraft is in a maintenance location when the tire replacement frequency is too high.

In the method of Figure 9, the historical data could be stored locally or at a remote location. Remote storage can allow a standalone maintenance device to access the historical data when needed without requiring a large storage capacity in the device itself. Remote storage can also allow aggregation of historical data across a plurality of maintenance locations.

Referring back to Figure 4, it has been observed that when temperature and/or pressure from historical aircraft tire pressure data is plotted against time, the shapes of the curves in the short term, such as after landing, are predictable. The construction of the tire monitoring device means that pressure is measured directly and is a reliable measurement of the instantaneous tire gas pressure at that point in time. The indirect coupling for the temperature means that temperature is not necessarily a reliable measurement of the gas temperature in the tire at all times, but it still follows predictable patterns.

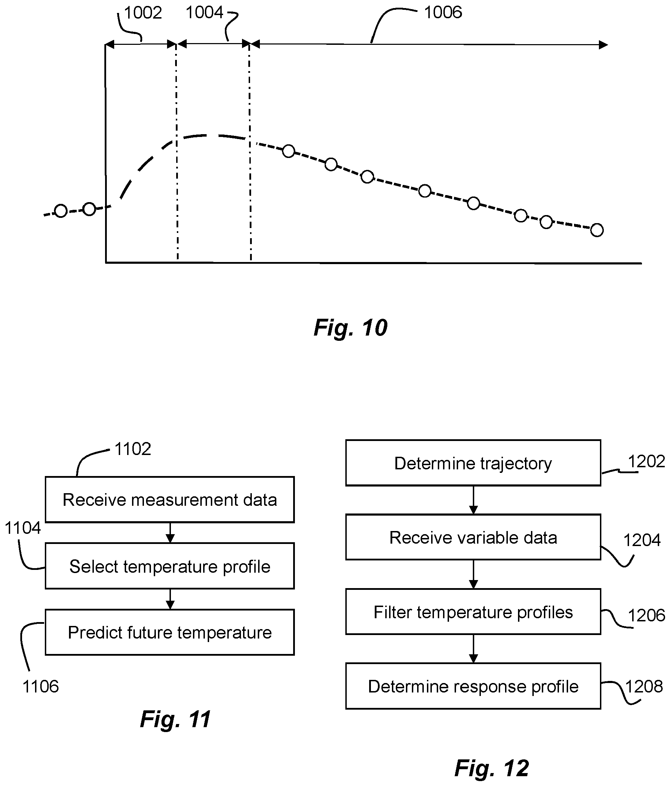

In general, the shape of the tire gas temperature profile following a landing event is depicted in Figure 10, which shows an example plot of temperature against time based on a typical shape of simulated, dynamometer and flight test data. The shape in Figure 5 is not based on any single source, but is simplified to aid understanding of the characteristics of the temperature profile. The temperature profile can be considered as involving three main phases: a heating phase 1002, a transition phase 1004 and a cooling phase 1006. In the heating phase 1002, the temperature of the gas in the tire rises as heat is transferred to the gas from the other components of the wheel system. Those components include the tire itself, which is hot due to flexure on landing, and the brake discs, which are hot from braking. Initially, these components transfer heat into the tire gas. The input of heat from these wheel components in the heating phase 1002 is greater than the heat loss to the surroundings so the tire gas temperature increases.

The transition phase 1004 follows the heating phase 1002 and occurs at the point when the other components of the wheel system have cooled to an extent that the transfer of heat from them to the tire gas is close to equilibrium with the heat loss of the tire gas to the surroundings. This results in a plateau-like section where the temperature rises relatively slowly to a maximum, before initially dropping relatively slowly from that maximum.

Finally, the cooling phase 1006 follows the transition phase 1004. Here the heat loss from the tire gas to the surroundings is greater than the heat input from the other components of the wheel system. The tire gas therefore gradually cools towards an equilibrium temperature, which is likely to be close to the ambient temperature.

In addition to the wheel system heat inputs, many other variables influence the cooling profile and the rate of temperature changes in each of the temperature phases. These variables may include:

• whether brake cooling fans are operational, which will cause the heat input from the brake system components to be reduced more quickly;
• ambient temperature, which will influence the rate of heat loss to the surroundings;
• weather such as:

  ◦ wind speed, higher wind speeds improve heat transfer to the surroundings; and
  ◦ cloud cover / direct sun, direct sun can provide a further heat input to the system.

While the temperature sensor in the tire monitoring device is indirectly coupled to the tire gas temperature, as the temperature nears equilibrium with the surroundings, the temperature of the sensor closely matches the tire gas temperature. In addition, the temperature sensor is influenced by much the same heat inputs as the tire gas. Thus, by examining the temperature profile of the measured temperature from a tire monitoring device, a good estimate of future temperature can be made, for example of the time when the temperature of the system as a whole will close to an equilibrium temperature or close below a threshold temperature. This can then be used to predict when the tire will have cooled to a safe temperature so that tire maintenance can be carried out.

The number of variables in the system are large, which makes it difficult to model the temperature profile with characteristic equations. Instead, it has been found that the temperature profile can be modelled well by maintaining a library or database with many different profiles. The different profiles represent different combinations of the variables that influence the temperature profile. Each profile may be created experimentally, from dynamometer testing, or by using data real-world tests. Each profile may also be created through a simulation, for example by using Computational Fluid Dynamics (CFD). The profile data can also be built up from data measured by the tire monitoring devices in their normal use.

One or more of the variable values may be associated with each cooling profile. For example, each profile may comprise metadata indicating at least one of the variable values that produced it. This can be useful to narrow the number of potential cooling profiles that apply when variables are known. For example, the metadata may indicate whether brake cooling fans are on or not.

The variables above change dependent on landing conditions, in addition different wheel systems and aircraft models introduce additional variables. The construction of the wheel system as a whole has an impact, because it will change the way in which the tire gas is heated after landing by other components of the wheel system and how quickly those other components cool, for example. Similar considerations apply between aircraft models. The profile library can therefore also store metadata to identify this and determine relevant profiles in the library. For example, metadata can identify a particular aircraft model (such as Airbus A320) or a particular wheel / tire combination that the profile relates to.

In addition, tire position on the aircraft also influences cooling profile, so the profile library can also record metadata indicating the tire position that a particular profile relates to. Tire position could be at a general level, such as "nose landing gear" or "main landing gear" positions, or more specific, such as a particular wheel position within the main landing gear.

Once the library of profiles has been created, measured temperature data from the historical data can be analyzed to select a cooling profile from the library that most closely represents the data. For example, pattern matching techniques can be used. In some examples the library of profiles may be pre-filtered to select appropriate cooling profiles based on knowledge of an aircraft type and wheel position. In some cases, such prefiltering may result in a selection of a single temperature profile. The cooling profile can then be used to extrapolate the likely cooling profile in the future and from that predict when a particular temperature will be reached, or the temperature at a particular time.

The accuracy with which a cooling profile can be fitted to the measured data increases the longer period that the measured data is available. At least 30 minutes data is beneficial and at least 45 minutes of data is preferred. Preferably, data of the heating phase and at least part of the transition phase of the cooling profile is available for use with the pattern matching.

The higher the frequency of measurements, the greater the accuracy of the pattern matching, but this involves a trade-off with power requirements for the tire monitoring device. Power draw of the tire monitoring device is correlated with the frequency of measurement because the tire monitoring device can be in a lower power mode between measurements. A measurement interval in the range of 5 to 10 minutes has been found to offer a good balance between being able to predict a cooling profile accurately and increased power draw for the tire monitoring device.

An example method using temperature profiles to predict a tire temperature is shown in Figure 11. The method can be implemented by a processing system, such as a maintenance device or a central maintenance system, or locally on the tire monitoring device. At block 1102, data is received comprising a plurality of measurements of temperature with associated times after a landing event. The data is measured by a tire monitoring device affixed to an aircraft wheel. The data may include only data measured since the last landing event or all data for a predetermined period. A landing event can be recognized in the larger measurement data set by calculating the temperature gradient; because of the large energy input heating is relatively rapid following a landing event, for example a positive temperature gradient of greater than 0.2°C/minute or greater than 0. 1°C/minute can indicate the start of a landing event.

Next, at block 1104, a temperature profile is selected from a plurality of predetermined temperature profiles based on the received data. This is described below in more detail with reference to Figure 12. Then, at block 1106, a future tire gas temperature is determined based on the selected temperature profile and the received data. For example, the selected temperature profile can be fitted to the measured data and then used to extrapolate future temperature against time. This is shown diagrammatically on Figure 10, if measured data up to the cooling phase 1006 is available (shown with a solid line), this is used to select a closest temperature profile from the library. The cooling phase 1006 can then be plotted following on from the measured data using the selected profile (shown with a dashed line) so that temperature in the future is predicted.

The prediction of the temperature can be used to predict when the gas temperature will fall to a level where tire maintenance is safe and/or reliable pressure measurements can be taken. For example, if the safe temperature for tire maintenance is a gas temperature of 50°C, then the time at which the temperature reaches 50°C can be predicted and reported. For example, the prediction might report that "tire maintenance can be carried out in 30 minutes" or "tire maintenance can be carried out at 16:00". Where the maximum temperature has not yet been reached, the prediction can also include the maximum gas temperature which is reached in the transition phase and possibly also the time to reach that temperature, both of which can be calculated from the temperature profile.. In some examples the maximum temperature prediction can be used to provide a maintenance indication or a safety indication, such as an advance warning of high pressure or temperature, or a potentially high differential pressure or temperature, such as might occur if one wheel has a dragging brake, to enable maintenance to be carried out.

In general, the accuracy of the prediction will increase the more measurement data is available. The method of Figure 11 may be repeated over time to increase the accuracy. For example, the prediction might report "tire maintenance can be carried out in about 2 hours, check predicted temperatures again in 30 minutes for an updated estimate" to prompt a user to make such multiple predictions.

Where insufficient data is available for pattern matching, the method may be halted at block 1102 and an error message indicated. For example the error message might be "not enough measurement data recorded yet, try again in 30 minutes". Insufficient data could be identified by looking at the time period since the landing event and ensuring that a minimum predefined time period of measurements, such as 30 minutes, is available. Alternatively, or additionally, insufficient data could be identified at block 1104, when no good candidate matching temperature profiles are identified, or too many candidate temperature profiles are identified.

Figure 12 is a flow chart giving more detail of how a temperature profile can be selected in block 1104 of Figure 6. At block 1202 a "trajectory" of the temperature over time is determined by interpolating between the measurement points or by fitting a curve to the measurement points. At block 1204, input variables are received, such as the aircraft model, wheel position and factors such as whether brake cooling fans are turned on. The variables may be entered by a maintainer, retrieved from storage, such as a storage in the tire monitoring device indicating a wheel position, or received from another system, such as a weather data service or a central maintenance system. At block 1206, the received variable data is used to filter the temperature profiles to only those with metadata compatible with the variable data. For example, if the variable data indicates that brake cooling fans are on, then only temperature profiles with metadata indicating that the brake cooling fans were on are considered for selection. Then, at block 1208, a response profile is determined from the filtered temperature profiles is determined or selected that best fits the measured data. For example, pattern matching techniques can be used to determine which profile has the best fit.

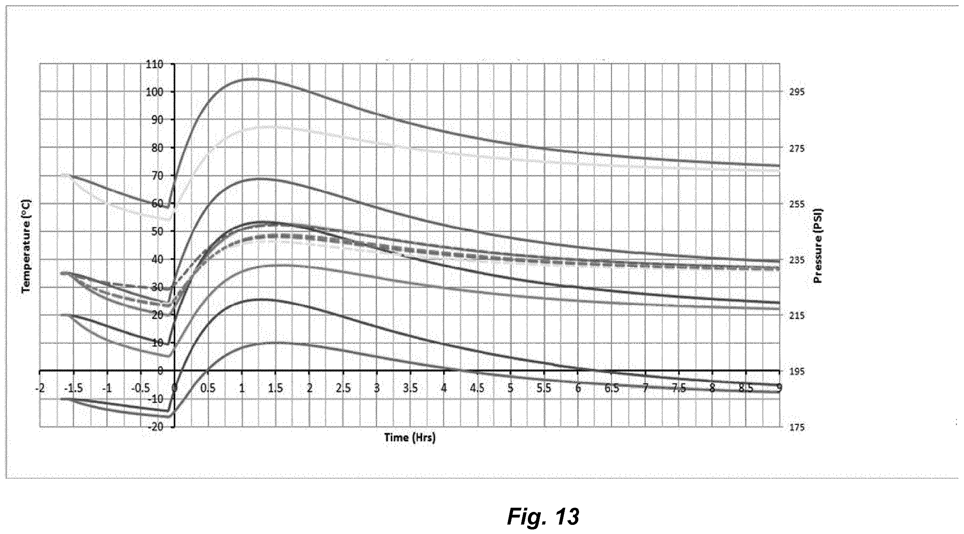

Figure 13 depicts an example of a plurality of cooling profiles that can be used with the methods of Figure 11 and 12. As with Figure 10, the data here is representative to assist understanding and is not based on any one particular source. The cooling profiles can be stored locally on the device carrying out the method of Figure 11 or 12 or externally in another computer system or database in communication with the device carrying out the method of Figure 11 or 12.

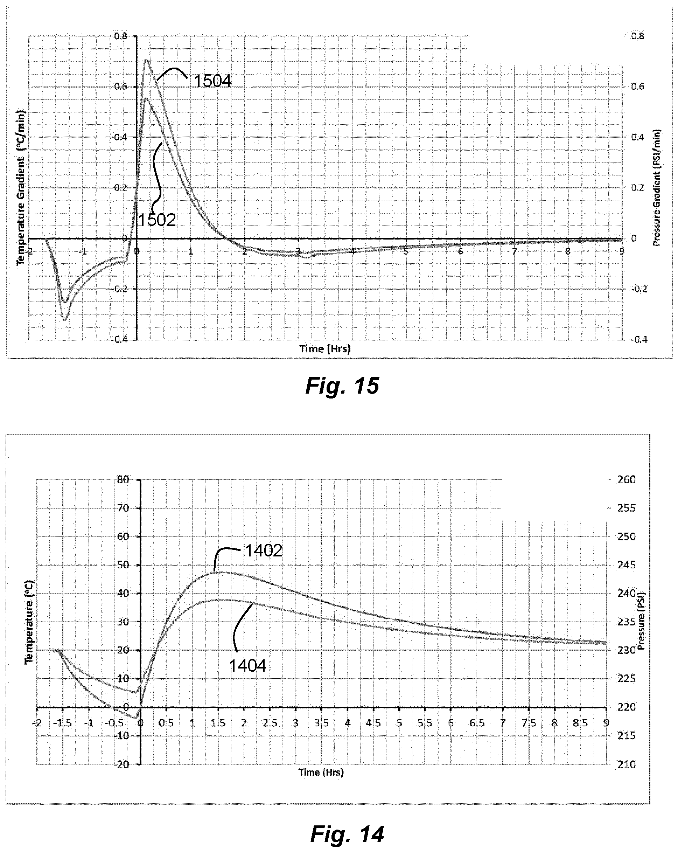

Figures 14 and 15 depict how gradients can be useful in the prediction. Figure 14 shows simulated data for tire gas pressure 1402 and tire gas temperature 1404 varying over time. Figure 15 shows the gradient of tire gas pressure 1502 and tire gas temperature 1504 data in Figure 14. The gradient can enable a landing event to be identified more easily. In some examples, the gradient may also be used in when selecting a temperature profile by matching both the temperature over time and the temperature gradient over time.

While the methods above have described only the use of temperature profiles, pressure profiles may also be used and can improve the accuracy of pattern matching. In these methods a temperature profile has an associated tire gas pressure profile, which may expressed as measured values or values normalized to a constant predetermined temperature, such as 15°C.

Temperature profiles are useful for landing events, where there is a high energy to dissipate and many variables that can influence the result. A different approach can be used for lower energy events, such as when an aircraft taxis from one location to another. There is still energy input which can result in heating, but it is much lower than on landing. During a taxi, tire flexure and brake temperature are lower than on landing.

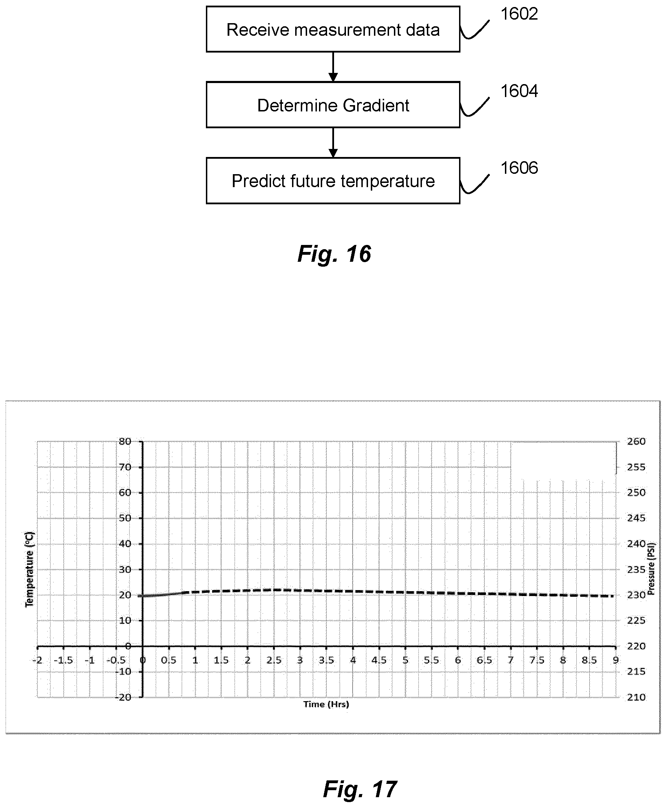

Figure 16 depicts a method of predicting future temperature by determining a temperature gradient over time, that can be implemented by a processing system. As before the processing system can form part of a maintenance device, a central maintenance system or the tire monitoring device itself.

While many short taxi events create minimal aircraft tire gas heating, in order to ensure safety, tire maintenance procedures nevertheless require an aircraft to stand for 3 hours after a taxi before carrying out tire maintenance. By examining the gradient of historical measurement data, gas temperature can be predicted more reliably. Once an aircraft is standing energy input to the wheel system is minimal so, if the gradient is shallow, the temperature is unlikely to rise much and so the gradient can be used confirm that it is safe to carry out tire maintenance without waiting a full 3 hour standing time.

Referring to Figure 16, at block 1602, data is received comprising a plurality of measurements of temperature with associated times, which has been measured by a tire monitoring device affixed to an aircraft wheel. The data can be received over a communication interface from tire monitoring device, from another device, or from another system of the device containing the processing system. Next, at block 1604, the gradient of the temperature data is determined. Data representing a predetermined period of time, such as the last 30 minutes or the last 1 hour may be used to determine the current temperature gradient. Then, at block 1606, the gradient can be used to predict a future tire temperature, for example by extending a straight line with the determined gradient into the future from the current measured temperature. For a shallow gradient, the predicted future temperature may be little different than the current temperature and this can be used to conclude that tire measurement is safe despite the taxi. In some examples, the value of the temperature is also considered to ensure that it below a predetermined threshold for safe tire maintenance.

Figure 17 depicts a graph of temperature and pressure against time for an aircraft following a taxi calculated using a Computational Fluid Dynamics (CFD) simulation. The aircraft has already been standing and the tire gas temperature and pressure were in equilibrium with the ambient temperature. The taxi caused gas temperature and pressure to rise slightly but the low energy means the rise is small. Determining the gradient and extrapolating the temperature to the future (the dashed part of the line in Figure 12) show that no significant change in temperature is expected. Tire maintenance can take place at the new location without delay.

The method of Figure 16 may be particularly useful for aircraft maintenance locations. Although maintenance facilities can be located at airports, some maintenance may require moving the aircraft from its stand. Using the method of Figure 16, tire maintenance can take place sooner because there is no need to wait 3 hours following the taxi.

Historical data recorded by tire monitoring devices is therefore useful over both the short and long term. It is worthwhile retaining data for long periods, perhaps several years or more. As more data is collected the volume of the data increases, impacting on both storage capacity and data transfer. If a measurement is recorded every 10 minutes a day then, for an aircraft with six wheels, that is 864 measurements a day, 25,920 measurements every 30 days and 315,360 measurements a year. The storage requirements are even higher for an Airbus A380 with twenty-two wheels. At the same 10 minute measurement interval, there are 3,168 measurements a day, 95,040 measurements every 30 days and 1,156,320 measurements a year. It would be desirable to reduce the size and/or volume of historical data recorded by tire monitoring devices.

It has been found that the different analysis methods of historical tire monitoring data have different data requirements. In particular, tire monitoring data can be effectively compressed, with minimal loss of accuracy for analysis, by storing older data with a longer time interval between measurements than more recent data.

Applications such as cooling time prediction, discussed above with reference to the method of Figure 11, have increased accuracy the more recent data is available. For cooling time prediction, a shorter measurement time interval is beneficial to improve the accuracy. It is therefore useful to have all the recorded data (all the measurements taken) available for cooling time prediction.

On the other hand, applications making use of stable points, such as the pressure trends discussed with reference to Figure 5 or the maintenance trend identification discussed with reference to Figure 9, do not require the same short time interval between measurements to improve their accuracy. It is a characteristic of a stable point that the measured parameters are changing slowly, so stable points can still be determined from data with a longer measurement interval.

Tire cooling prediction is unlikely to be required over a time period longer than a few hours, such as less than 24-hours, less than 12 hours or less than 3 hours. All data older than this can therefore be stored with a longer interval between measurements to reduce storage requirements. Thus, tire monitoring data can be compressed while retaining utility for analysis in the short term and the long term by discarding selected older measurements to lengthen the interval between stored measurements. In one example, the data compression method comprises discarding particular ones of the data which are older than a first threshold age, such that data which is older than the first threshold age is retained at a second time interval that is longer than the first time interval. The first threshold age may be less than or equal to 24 hours, less than or equal to 12 hours, or less than or equal to 3 hours to ensure sufficient data is available for tire cooling prediction.

This method can achieve high compression in a computationally simple way. While it is "lossy" compression, analysis techniques of older tire monitoring measurement data is not required to the same high resolution as recent data; the same utility of data can be achieved with reduced storage requirements. As a further benefit, the compressed data can be directly manipulated, there is no need for an intermediate decompression step before using it. The resulting small data volume can allow analysis methods to work at an increased speed and efficiency.

For example, if older data is compressed by discarding every other measurement, then compression of close to 50% can be achieved. Although all recent measurements are kept, if they are kept for the most recent 24-hours it is a small proportion of the total data stored: just 0.27% of a year's data, for example. By discarding greater numbers of consecutive measurements in older data, such every $2^{nd}$ and $3^{rd}$ measurement or every $2^{nd}$, $3^{rd}$ and $4^{th}$ measurement, even greater compression can be achieved: over a long period of time, such as more than 100 days, only about $1/(n+1)$ of the data is required to be stored, where n is the number of samples discarded, compared to storing all the measurements.

The compression is also useful where shorter histories of tire pressure measurements are stored. For example, if every other measurement is discarded for data over 24 hours old (the first time threshold) and data is recorded initially at a 10-minute measurement interval (the first measurement time interval) then the storage requirement for 3 days of data is reduced from 432 measurements to 288 measurements. Such a saving can be beneficial in a resource-constrained environment such as a tire monitoring device.

If the second measurement time interval is chosen to be an integer multiple of the first measurement interval, then compressing the data can be achieved by discarding a predetermined number of consecutive measurements and then retaining the next consecutive measurement. This has low computational requirements to achieve the compression and can be implemented in real time in limited hardware, such as might be present in a tire monitoring device.

Nonetheless, tire measurement data cannot be discarded indefinitely, there is a limit where discarding too much data can make identifying stable points unreliable or misleading. It is therefore preferred that a maximum interval between older measurements is less than or equal to 30 minutes, or less than or equal to 20 minutes.

In order for the recent data to be of most use, it preferably has a first measurement time interval of less than or equal to 15 minutes, less than or equal to 10 minutes or less than or equal to 5 minutes so that tire cooling prediction can be more accurate. A measurement interval of 10 minutes gives a good balance between utility for analysis and increased power requirements for the monitoring device to take measurements more frequently.

In some cases, it might not be desired to retain a long-term history of tire measurement data. For example, in the tire monitoring device itself it may only be required to store sufficient measurements to transfer the history since the last tire pressure check according to the Maintenance Planning Document (MPD). In that case, a second age threshold can be used to discard all data which is older than the second age threshold, such as 3 days.

The method can be executed in the tire monitoring device itself, concurrently with the storage of new data from tire measurements at the first measurement time interval. Alternatively, the tire monitoring device may simply store all measurements taken over a predetermined time, such as three days and apply the compression at the point data set is transmitted to another device. This can achieve power and/or time savings on the transmission because less data is required to be sent. In another example, the tire monitoring may not apply any compression, and the compression may be applied by a device receiving the data, such as maintenance device or a central maintenance system.

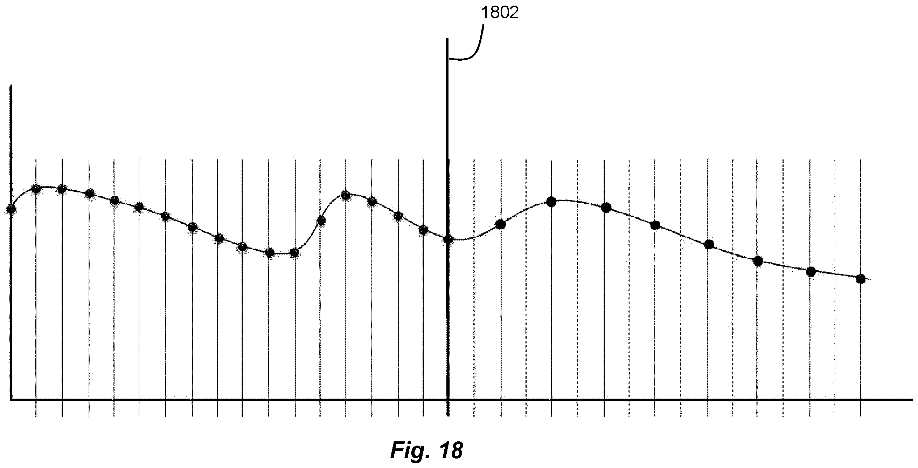

Figure 18 is a diagrammatic representation of compressed tire gas pressure measurements according to an example. The horizontal axis represents time, with the most recent data at the left hand edge. Each vertical grid line represents a first time interval, in this case 10 minutes. The vertical axis represents the pressure measurement. It can be seen that data up a first age or time threshold 1802 is stored with a measurement interval of 10 minutes, while after the first age threshold 1802 data is stored with a measurement data interval of 20 minutes. Alternate measurements of the data after the first age threshold are discarded. The data shown in Figure 18 is not real data but is purely to illustrate the way tire monitoring data can be compressed.

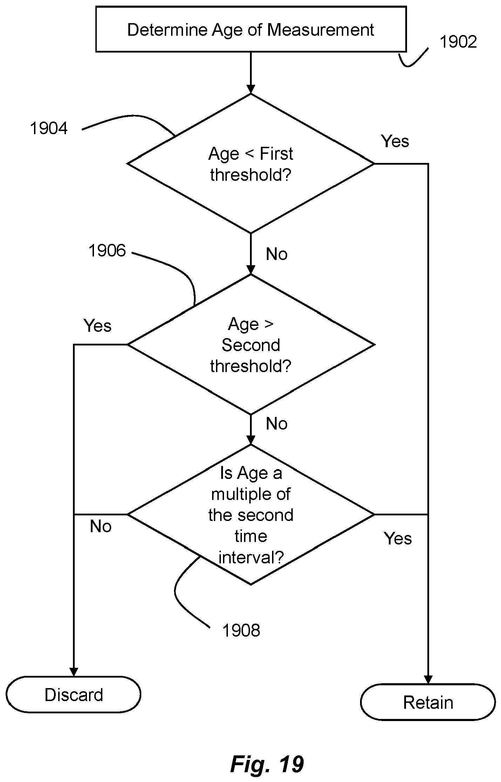

Figure 19 is a flow chart of an example method of compressing tire measurement data in which the principles discussed above are implemented. The method of Figure 19 is carried out for each member of data set of historical measurements from a tire monitoring device, such as tire gas pressure and/or temperature. At block 1902, the age of each measurement is determined. For example, each measurement has an associated time and this time can be used to calculate the age of the measurement.

At block 1904, the age is compared to a first age threshold, representing the age below which all data is required to be retained. If the age is less than the first time threshold the measurement is retained and the method is repeated for the next measurement in the data set. For example, if the data is younger than 24 hours old it is retained. Otherwise, if the age is greater than the first time threshold, then execution proceeds to block 1906.

Then, at block 1906, the determined age is compared to a second age threshold. The second age threshold represents the threshold after which no data is required to be retained. If the age is greater than the second age threshold, the data is discarded and the method is repeated for the next measurement in the data set. For example, if the data is older than 3 days old it is discarded. If the age is less than the second threshold, then execution proceeds to block 1908.

At block 1908, it is determined whether the age is a multiple of the second time interval. For example, if the second time interval is 20 minutes, representing the time interval between older measurements which are to be retained, then checking for integer multiples of that interval is one way to distinguish measurements to be retained from those that are to be discarded. If the age is an integer multiple of the second time interval, then the measurement is retained. Otherwise, the measurement is discarded. The method is then repeated for the next measurement in the data set.

Figure 19 is one example of how compression of tire measurement data can be carried out according to the principle of retaining older data with a longer interval between measurements (sampling interval) than more recent data. The present invention is not limited only to the method of Figure 19, any other suitable method of selectively retaining or discarding data is possible within the scope of the appended claims. For example, although Figure 19 determined the age of the measurement, other examples may instead use a time-base for time comparisons. Where the time is stored in real-time the first and second thresholds can be time thresholds expressed in real-time and determined from the current time. If the current time is 10:00 on 10 October, the first threshold could be determined as 10:00 on 9 October when the first threshold corresponds to 24 hours, for example.

Figure 20 is a schematic diagram of a system 2000 in which the methods of the present invention can be carried out. A plurality of tire monitoring devices 2002 as discussed above with reference to Figure 1 are provided on a same aircraft. In this case there are six tire monitoring devices 2002 for a six-wheeled aircraft, such as an Airbus A320 discussed above with reference to Figure 2. The tire monitoring devices 2002 are in communication with a cockpit information system 2004, which includes a processing system 2006 and a communication interface 2008. The tire monitoring devices are also in communication with a separate maintenance device 2010, such as a smart phone running a suitable app or another portable or hand-held device that can be used to interrogate the sensors and receive historical measurement data from the tire monitoring devices. Similar to the cockpit information system 2004, the maintenance device 2010 includes a processing system 2012 and a communication interface 2014.

One or both of the cockpit information system 2004 and the maintenance device 2010 is also in communication with a central maintenance system 2016. The central maintenance system 2016 comprises a processing system 2018 and a communication interface 2020. At predefined times, or in response to predetermined events, such as taking a tire pressure measurement, the cockpit information system and/or the maintenance device 2010 transmit historical data of tire pressure and temperature measurements to the central maintenance system using the communication interfaces. The communication interface 2008, 2014 of the cockpit information system and the maintenance device may comprise a separate interface for communicating with the central maintenance system or the same interface can be used as for communicating with the tire monitoring devices 2002. For example, the maintenance device communicates with the tire monitoring devices over a first wireless communication interface, such as according to an IEEE 802.11 standard or Bluetooth, and communicates with the central maintenance system 2016 over a second wireless communication interface, such as one according to a cellular standard, such as those defined by 3GPP or ETSI.

Reference to a "processing system" includes system with one or more processors (which may have one or more cores) as well as distributed processing systems which may be distributed over a plurality of physical devices and/or locations.

Where methods have been described above, they can be implemented wholly in software, wholly in hardware (such as by an application specific integrated circuit) or any combination of software and hardware. A software implementation may comprise computer-readable medium comprising instructions that instruct a processor to carry out the method. The computer-readable medium may be a non-transitory computer readable medium.

It is to be noted that the term "or" as used herein is to be interpreted to mean "and/or", unless expressly stated otherwise.

The above embodiments are to be understood as illustrative examples of the invention. Further embodiments of the invention are envisaged. The scope of the invention is defined in the accompanying claims.

**Claims**

1. A computer-implemented method of compressing a data set comprising a plurality of historical tire monitoring measurements spaced by a first time interval, **characterised in that** the method comprises:
   discarding particular ones of the historical tire monitoring measurements which are older than a first threshold age, such that historical tire monitoring measurements which are older than the first threshold age are retained at a second time interval that is longer than the first time interval wherein the discarding particular ones comprises:

   either discarding every other measurement, or discarding a predetermined number of consecutive measurements before retaining the next consecutive measurement.

2. A method according to claim 1 wherein the first time interval is less than or equal to 10 minutes.

3. A method according to claim 1 or 2, wherein the second time interval is greater than or equal to 20 minutes.

4. A method according to any of claims 1 to 3, wherein the second time interval is an integer multiple of the first time interval.

5. A method according to any of claims 1 to 4, wherein the first threshold age is less than or equal to 24 hours.

6. A method according to any of claims 1 to 5, further comprising discarding all data which is older than a second threshold age, wherein the second threshold age is greater the first threshold age.

7. A method according to claim 6, wherein the second threshold age is greater than or equal to the maximum time between tire pressure measurements specified in the Maintenance Planning Documents of the aircraft.

8. A method according to any of claims 1 to 7, wherein the method is executed concurrently with the storage of new measurement data received at the first measurement interval.

9. A method according to any of claims 1 to 7, wherein the method is executed prior to transmission of the data set to another device.

10. A processing system configured to execute the method according to any of claims 1 to 9.

11. A tire monitoring device comprising:

   a pressure sensor configured to take tire gas pressure measurements separated by a first time interval;
   a storage; and
   a processing system configured to cause the pressure sensor to take a tire gas pressure measurements separated by a first time interval and store them in the storage;

wherein the storage further comprises instructions that, when executed by the processing system, cause the processing system to compress the tire gas pressure measurements stored in the storage using a method according to any of claims 1 to 9.

12. A computer-readable medium comprising instructions that, when executed by a processing system, instruct the processing system to perform a method according to any of claims 1 to 9.

**Patentansprüche**

1. Computerimplementiertes Verfahren zum Komprimieren eines Datensatzes, der eine Vielzahl von historischen Reifenüberwachungsmessungen umfasst, die durch ein erstes Zeitintervall beabstandet sind,

**dadurch gekennzeichnet, dass** das Verfahren Folgendes umfasst:
Verwerfen von speziellen der historischen Reifenüberwachungsmessungen, die älter sind als ein erstes Schwellwertalter, derart, dass historische Reifenüberwachungsmessungen, die älter sind als das erste Schwellwertalter, in einem zweiten Zeitintervall gehalten werden, das länger ist als das erste Zeitintervall, wobei das Verwerfen von Speziellen Folgendes umfasst:

entweder Verwerfen von jeder zweiten Messung oder
Verwerfen einer vorbestimmten Anzahl von aufeinanderfolgenden Messungen, bevor die nächste aufeinanderfolgende Messung gehalten wird.

2. Verfahren nach Anspruch 1, wobei das erste Zeitintervall kleiner als oder gleich 10 Minuten ist.

3. Verfahren nach Anspruch 1 oder 2, wobei das zweite Zeitintervall größer als oder gleich 20 Minuten ist.

4. Verfahren nach einem der Ansprüche 1 bis 3, wobei das zweite Zeitintervall ein ganzzahliges Vielfaches des ersten Zeitintervalls ist.

5. Verfahren nach einem der Ansprüche 1 bis 4, wobei das erste Schwellwertalter kleiner als oder gleich 24 Stunden ist.

6. Verfahren nach einem der Ansprüche 1 bis 5, das ferner das Verwerfen von allen Daten umfasst, die älter sind als ein zweites Schwellwertalter, wobei das zweite Schwellwertalter größer ist als das erste Schwellwertalter.

7. Verfahren nach Anspruch 6, wobei das zweite Schwellwertalter größer als oder gleich der maximalen Zeit zwischen Reifendruckmessungen ist, die in den Wartungsplanungsdokumenten des Luftfahrzeugs spezifiziert sind.

8. Verfahren nach einem der Ansprüche 1 bis 7, wobei das Verfahren gleichzeitig mit der Speicherung von neuen Messdaten ausgeführt wird, die im ersten Messintervall empfangen werden.

9. Verfahren nach einem der Ansprüche 1 bis 7, wobei das Verfahren vor der Übertragung des Datensatzes zu einer anderen Vorrichtung ausgeführt wird.

10. Verarbeitungssystem, das dazu ausgelegt ist, das Verfahren nach einem der Ansprüche 1 bis 9 auszuführen.

11. Reifenüberwachungsvorrichtung, die Folgendes umfasst:

einen Drucksensor, der dazu ausgelegt ist, Reifengasdruckmessungen vorzunehmen, die durch ein erstes Zeitintervall getrennt sind;
einen Speicher; und
ein Verarbeitungssystem, das dazu ausgelegt ist, den Drucksensor zu veranlassen, Reifengasdruckmessungen vorzunehmen, die durch ein erstes Zeitintervall getrennt sind, und sie im Speicher zu speichern;
wobei der Speicher ferner Anweisungen umfasst, die, wenn sie vom Verarbeitungssystem ausgeführt werden, das Verarbeitungssystem veranlassen, die Reifengasdruckmessungen, die im Speicher gespeichert sind, unter Verwendung eines Verfahrens nach einem der Ansprüche 1 bis 9 zu komprimieren.

12. Computerlesbares Medium, das Anweisungen umfasst, die, wenn sie von einem Verarbeitungssystem ausgeführt werden, das Verarbeitungssystem anweisen, ein Verfahren nach einem der Ansprüche 1 bis 9 durchzuführen.

**Revendications**

1. Procédé, mis en œuvre par ordinateur, de compression d'un ensemble de données comprenant une pluralité de mesures historiques de surveillance de pneu espacées d'un premier intervalle de temps, le procédé étant **caractérisé en ce qu'**il comprend :
l'élimination de mesures particulières parmi les mesures historiques de surveillance de pneu qui sont plus anciennes qu'une première ancienneté seuil, de façon à conserver des mesures historiques de surveillance de pneu qui sont plus anciennes que la première ancienneté seuil à un deuxième intervalle de temps plus long que le premier intervalle de temps, l'élimination de mesures particulières comprenant :

soit l'élimination d'une mesure sur deux, soit l'élimination d'un nombre prédéterminé de mesures consécutives avant la conversation de la mesure consécutive suivante.

2. Procédé selon la revendication 1, le premier intervalle de temps étant inférieur ou égal à 10 minutes.

3. Procédé selon la revendication 1 ou 2, le deuxième intervalle de temps étant supérieur ou égal à 20 minutes.

4. Procédé selon l'une quelconque des revendications 1 à 3, le deuxième intervalle de temps étant un entier multiple du premier intervalle de temps.

5. Procédé selon l'une quelconque des revendications 1 à 4, la première ancienneté seuil étant inférieure ou égale à 24 heures.

6. Procédé selon l'une quelconque des revendications 1 à 5, comprenant en outre l'élimination de toutes les données qui sont plus anciennes qu'une deuxième ancienneté seuil, la deuxième ancienneté seuil étant supérieure à la première ancienneté seuil.

7. Procédé selon la revendication 6, la deuxième ancienneté seuil étant supérieure ou égale au temps maximal entre des mesures de pression de pneu stipulé dans le Plan de Maintenance de l'aéronef.

8. Procédé selon l'une quelconque des revendications 1 à 7, le procédé étant exécuté simultanément au stockage de nouvelles données de mesure reçues au premier intervalle de mesure.

9. Procédé selon l'une quelconque des revendications 1 à 7, le procédé étant exécuté préalablement à la transmission de l'ensemble de données à un autre dispositif.

10. Système de traitement configuré pour exécuter le procédé selon l'une quelconque des revendications 1 à 9.

11. Dispositif de surveillance de pneu, comprenant :

un capteur de pression configuré pour prendre des mesures de pression de gaz de pneu séparées d'un premier intervalle de temps ;
une unité de stockage ; et
un système de traitement configuré pour amener le capteur de pression à prendre des mesures de pression de gaz de pneu séparées d'un premier intervalle de temps et les stocker dans l'unité de stockage ;
l'unité de stockage comprenant en outre des instructions qui, lorsqu'elles sont exécutées par le système de traitement, amènent le système de traitement à comprimer les mesures de pression de gaz de pneu stockées dans l'unité de stockage au moyen d'un procédé selon l'une quelconque des revendications 1 à 9.

12. Support lisible par ordinateur comprenant des instructions qui, lorsqu'elles sont exécutées par un système de traitement, donnent instruction au système de traitement de réaliser un procédé selon l'une quelconque des revendications 1 à 9.

**Fig. 1**

10

2000

**Fig. 20**

Fig. 2

Fig. 3

*Fig. 4*

```
┌────────────────────────────────────┐
│            Receive data            │ ⎫ 502
└────────────────────────────────────┘
                  │
                  ▼
┌────────────────────────────────────┐
│       Determine stable points      │ ⎫ 504
└────────────────────────────────────┘
                  │
                  ▼
┌────────────────────────────────────┐
│       Normalize stable points      │ ⎫ 506
└────────────────────────────────────┘
                  │
                  ▼
┌────────────────────────────────────┐
│    Fit trend line to normalised data│ ⎫ 508
└────────────────────────────────────┘
                  │
                  ▼
┌────────────────────────────────────┐
│      Determine tire maintenance    │ ⎫ 510
└────────────────────────────────────┘
                  │
                  ▼
┌────────────────────────────────────┐
│      Indicate maintenance action   │ ⎫ 512
└────────────────────────────────────┘
```

*Fig. 5*

**Fig. 6**

**Fig. 7**

**Fig. 8**

```
┌─────────────────────────────────────────────┐
│                                             │
│              Receive Data                   │⌇── 902
│                                             │
└─────────────────────────────────────────────┘
                      │
                      ▼
┌─────────────────────────────────────────────┐
│                                             │
│      Determine maintenance information      │⌇── 904
│                                             │
└─────────────────────────────────────────────┘
                      │
                      ▼
┌─────────────────────────────────────────────┐
│                                             │
│             Provide indication              │⌇── 906
│                                             │
└─────────────────────────────────────────────┘
```

*Fig. 9*

1002    1004    1006

**Fig. 10**

1102

| Receive measurement data |

1104

| Select temperature profile |

| Predict future temperature |

1106

**Fig. 11**

| Determine trajectory | 1202

| Receive variable data | 1204

| Filter temperature profiles | 1206

| Determine response profile | 1208

**Fig. 12**

Fig. 13

**Fig. 15**

**Fig. 14**

**Fig. 16**

**Fig. 17**

Fig. 18

Fig. 19

**REFERENCES CITED IN THE DESCRIPTION**

**Patent documents cited in the description**

- US 2016311273 A

- EP 3498501 A1